# FASCICULE DE BREVET EUROPEEN

(11) **EP 2 600 711 B1**
(45) Date de publication et mention de la délivrance du brevet: **07.12.2016**
(21) Numéro de dépôt: 11735647.7
(22) Date de dépôt: 25.07.2011
(51) Int. Cl.: A01K 45/00

(54) **PROCEDE DE DETERMINATION DE LA POSITION D'UNE AIGUILLE D'INJECTION ET/OU DE PRELEVEMENT DANS UN OEUF ET SYSTEME CORRESPONDANT**
VERFAHREN ZUR BESTIMMUNG DER POSITION EINER INJEKTIONS- UND/ODER PROBENENTNAHMENADEL IN EINEM EI UND ZUGEHÖRIGES SYSTEM
PROCESS FOR DETERMINING THE POSITION OF AN INJECTION AND/OR SAMPLING NEEDLE IN AN EGG AND CORRESPONDING SYSTEM

(30) Priorité: 05.08.2010 FR 1003279
(43) Date de publication de la demande: 12.06.2013
(73) Titulaire: Ceva Santé Animale, 33500 Libourne Cedex (FR)
(72) Inventeur: COMTE, Sylvain, F-33370 Salleboeuf (FR); MOREIRA DE SOUZA, Fabio, F-33320 Eysines (FR)
(74) Mandataire: Vidon Brevets & Stratégie
(86) Numéro de dépôt international: PCT/EP2011/062708
(87) Numéro de publication internationale: WO 2012/016870

(56) Documents cités:
- WO-A1-00/40079
- WO-A2-2006/047458
- US-A1- 2007 137 577

## Description

### 1. Domaine technique de l'invention

L'invention concerne les installations et procédés d'injection et/ou de prélèvement d'un matériau dans un oeuf aviaire. L'invention concerne plus particulièrement les dispositifs et procédés de détermination de la position d'une aiguille dans un oeuf, cette détermination pouvant être préalable à l'injection / prélèvement, concomitante à l'injection / prélèvement ou postérieure à l'injection/ prélèvement. L'invention est plus particulièrement destinée aux traitements des oeufs fécondés des espèces ovipares, notamment les volailles.

### 2. Arrière-plan technologique

Un certain nombre de techniques ont été élaborées jusqu'à présent pour permettre la vaccination in ovo d'embryons, c'est-à-dire la vaccination d'embryons alors que ces derniers sont encore dans l'oeuf. Il est en effet reconnu que ces vaccinations in ovo permettent une diminution des coûts, une forte automatisation de la vaccination, une réduction du stress et augmente le taux de succès par rapport à une vaccination des poussins après éclosion.

L'une des difficultés de cette opération de vaccination in ovo réside dans le contrôle de la position de l'aiguille dans l'oeuf; la taille de l'oeuf pouvant varier de façon significative. En effet, un oeuf fécondé comprend une pluralité de compartiments distincts, dont la coquille externe, la chambre d'air, l'allantoïde, le vitellus, le liquide amniotique et l'embryon. Or, une vaccination n'est efficace que si le produit est injecté dans l'embryon ou le liquide amniotique.

Il est en pratique difficile de certifier que l'injection a été proprement réalisée, notamment sur les chaînes automatisées de traitement des oeufs aviaires, tels que les chaînes de traitement des oeufs des futurs poulets de chair.

L'une des solutions couramment utilisé de nos jours consiste à mélanger le produit injecté avec un colorant et à échantillonner de large quantité d'oeufs sur la chaîne de vaccination pour vérifier la qualité de l'injection. Si l'oeuf ainsi testé est jugé non conforme, alors le dispositif d'injection est ré-étalonné.

L'un des inconvénients de cette méthode est qu'elle nécessite la destruction de plusieurs milliers d'oeufs sans néanmoins garantir une bonne reproductibilité de la vaccination et nécessite une mise en place lourde en terme de personnel et de temps. Un autre inconvénient lié à cette destruction massive d'oeufs est l'impossibilité d'appliquer cette méthode en routine et le caractère invasif qui est non compatible avec les standards d'automatisation et de productivité.

Il a également été proposé par le document de brevet US 7617795 un dispositif de contrôle de l'enfoncement de l'aiguille dans l'oeuf. Pour ce faire, une bague formant butée est montée sur l'aiguille à une distance prédéterminée de l'extrémité de l'aiguille délivrant le produit de vaccination, dite pointe de l'aiguille ci-après. Ainsi, lors de l'insertion de l'aiguille dans l'oeuf, la profondeur d'enfoncement de l'aiguille dans l'oeuf est limitée par la bague formant butée. Il est ainsi possible de contrôler la profondeur d'enfoncement de l'aiguille dans l'oeuf et donc de conduire la pointe de l'aiguille dans la zone dans laquelle l'injection doit être réalisée en ajustant la distance entre cette pointe de l'aiguille et la bague formant butée.

Cette solution présente néanmoins l'inconvénient de ne pas être adaptative à chaque oeuf, notamment lors de la vaccination d'oeufs en chaîne. En particulier, si un oeuf présente un calibre différent de l'oeuf ayant servi de référence pour déterminer la distance entre la pointe de l'aiguille et la bague formant butée, la pointe peut ne pas être suffisamment avancée dans l'oeuf pour atteindre le liquide amniotique ou l'embryon ou à l'inverse être trop avancée et occasionner des lésions néfastes à l'embryon. Il existe donc un besoin pour un procédé et un dispositif de détermination de la position d'une aiguille d'injection et/ou de prélèvement de manière à pouvoir contrôler et/ou suivre la position de l'aiguille d'injection et/ou de prélèvement dans l'oeuf et garantir une vaccination et/ou un prélèvement dans les conditions nominales.

Il existe aussi un besoin pour une méthode de contrôle de la position d'une aiguille dans un oeuf qui puisse être adaptative de sorte que pour chaque oeuf traité, on puisse garantir que la vaccination et/ou le prélèvement est effectuée dans les conditions nominales. WO-A-00/40079 divulgue un système de poistionnement d'une pointe d'aiguille d'injection dans un oeuf.

### 3. Objectifs de l'invention

Dès lors, l'invention vise à pallier au moins certains des inconvénients des procédés et dispositifs de l'état de la technique.

En particulier, l'invention vise à fournir, un procédé de détermination de la position d'une aiguille d'injection et/ou de prélèvement dans un oeuf, au cours d'une opération d'injection ou de prélèvement.

L'invention vise aussi à fournir un procédé de détermination de la position d'une aiguille dans un oeuf qui peut être utilisé en vue de positionner une aiguille dans une zone cible d'un oeuf, notamment dans la chambre à air, l'allantoïde, le vitellus, le liquide amniotique ou l'embryon, selon le but recherché.

L'invention vise aussi à fournir, un procédé de détermination de la position d'une aiguille dans un oeuf qui peut être mis en oeuvre sur une chaîne de traitement automatisé des oeufs.

L'invention vise aussi à fournir, un procédé de détermination de la position d'une aiguille dans un oeuf qui puisse être mis en oeuvre à faible coût.

L'invention vise aussi à proposer un dispositif mettant en oeuvre un procédé selon l'invention.

### 4. Exposé de l'invention

Pour ce faire, l'invention concerne un procédé d'assistance au positionnement d'une pointe d'aiguille d'injection et/ou de prélèvement dans un oeuf, comprenant les étapes consistant à :
- mesurer au moins une grandeur électrique caractéristique d'une zone cible en vue d'obtenir une grandeur électrique de référence ;
- mesurer ladite grandeur électrique au niveau de ladite pointe pour obtenir une valeur mesurée en une position de la pointe dans l'oeuf;
- comparer ladite valeur mesurée à ladite grandeur caractéristique de référence.

Un procédé selon l'invention permet par la mesure d'une grandeur électrique caractéristique d'un milieu s'étendant entre une première électrode plongée dans l'oeuf et une seconde électrode placée à l'extérieur de l'oeuf de fournir une information représentative de la constante diélectrique de ce milieu. La valeur mesurée de la grandeur électrique dépend donc de la position de l'aiguille dans l'oeuf. En d'autres termes, le milieu variant selon la position de l'aiguille, la constante diélectrique mesurée varie également en fonction de la position de l'aiguille dans l'oeuf, par exemple au cours d'une opération d'injection ou de prélèvement d'un produit dans l'oeuf. En particulier, un oeuf fécondé comprend une coquille externe, une chambre à air, une poche de liquide allantoïde, une poche de liquide amniotique et l'embryon. Dès lors, la composition du milieu entre les deux électrodes varie en fonction de la zone dans laquelle se trouve la pointe de l'aiguille au niveau de laquelle la grandeur électrique est mesurée. Si la pointe de l'aiguille se trouve dans la chambre à air, le milieu sera essentiellement constitué d'air et de la coquille, dans le cas où la seconde électrode est placée sur la surface externe de la coquille. Dès lors, la constante diélectrique du milieu sera voisine de 1. Au contraire, si la pointe de l'aiguille est dans le liquide amniotique, la constante diélectrique sera plus importante. L'invention permet donc de déterminer une zone de localisation de l'aiguille par l'analyse d'au moins une valeur, notamment une pluralité de valeurs, de mesure de cette grandeur caractéristique.

L'invention permet ainsi de positionner précisément une aiguille d'injection et/ou de prélèvement dans une zone cible d'un oeuf en déplaçant l'aiguille d'une première position rétractée dans laquelle la pointe de l'aiguille est à l'extérieur de l'oeuf, jusqu'à la zone cible, en relevant régulièrement les mesures de la grandeur caractéristique et en les comparant à une table d'abaques par exemple jusqu'à ce que la mesure corresponde à une mesure de zone cible.

Un procédé selon l'invention est particulièrement adapté à la détermination de la position d'une aiguille dans un oeuf au cours d'une opération d'injection et/ou de prélèvement d'un produit.

Selon une autre variante, une analyse des variations de cette grandeur caractéristique est mise en oeuvre pour déterminer les changements de zone de l'aiguille au cours de son déplacement.

Avantageusement, le procédé comprend en outre une phase consistant à comparer au moins une valeur mesurée de la grandeur caractéristique à une table de plages de valeurs prédéterminées, dont chaque plage de valeurs correspond à une zone de l'oeuf prédéterminée.

Cette variante permet de comparer la valeur mesurée avec une table de plages de valeurs prédéterminées. Ces plages de valeurs peuvent êtres fixés et déterminés à l'avance ou êtres évalués à partir d'une première valeur mesurée, par exemple, lors de l'introduction de l'aiguille dans l'oeuf, qui sert ensuite de référence pour la détermination des plages de valeurs.

Un procédé selon l'invention peut être utilisé pour tous types d'oeufs, en particulier pour les oeufs fécondés d'une espèce animale ovipare.

On note que la zone de localisation déterminée appartient au groupe comprenant la chambre à air de l'oeuf, le liquide allantoïdien, le liquide amniotique, l'embryon et la coquille. De telles zones correspondent aux principales zones d'un oeuf fécondé d'une espèce ovipare, telle que les volailles.

Un procédé selon l'invention permet donc de déterminer précisément dans quelle zone de l'oeuf la pointe de l'aiguille d'injection et/ou de prélèvement se situe et donc de la déplacer si la zone en question ne correspond pas à une zone cible d'injection et/ou de prélèvement. Par exemple, dans le cas d'une vaccination in ovo d'un embryon, il est nécessaire que le produit soit injecté directement dans l'embryon ou dans le liquide amniotique. Dès lors, un procédé selon l'invention permet de garantir la bonne vaccination des embryons.

Selon une variante avantageuse de l'invention, l'étape de mesure de la grandeur électrique au niveau de la pointe est réalisée à l'aide d'une première électrode au niveau de la pointe, le procédé comprenant en outre une étape consistant à plonger ladite seconde électrode dans une solution conductrice permettant d'assurer une conduction électrique entre les deux électrodes par l'intermédiaire de cette solution.

Cette solution conductrice peut être par exemple une solution saline et/ou chlorée dans laquelle la base de l'oeuf est plongée pour permettre de conduire le courant dans le circuit formé des deux électrodes et de l'oeuf.

Selon une autre variante avantageuse de l'invention, l'étape de mesure d'une grandeur électrique au niveau de la pointe est réalisée à l'aide d'une première électrode au niveau de ladite pointe et d'une deuxième électrode, le procédé comprenant en outre l'étape consistant à apposer ladite seconde électrode sur la coquille externe de l'oeuf.

Le placement de la seconde électrode directement sur l'oeuf permet de réduire le circuit électrique formé par les électrodes et l'oeuf, ce qui permet d'améliorer la qualité des mesures de la grandeur caractéristique. En outre, cela simplifie l'automatisation du procédé sur une chaîne de montage. En particulier, aucun bac de réception de la solution conductrice n'est nécessaire.

Avantageusement et selon cette variante, ladite coquille de l'oeuf est en outre enduite avec une solution conductrice, au niveau du contact avec ladite seconde électrode afin d'améliorer la conduction du courant.

La détermination de la position de l'aiguille d'injection et/ou de prélèvement par un procédé selon l'invention repose sur la mesure d'une grandeur caractéristique d'un milieu délimité par deux électrodes, dont l'une, l'électrode primaire, est prévue au niveau de la pointe de l'aiguille. Cette mesure est représentative de la constante diélectrique du milieu.

Préférentiellement, la grandeur électrique mesurée est l'impédance du milieu. Une mesure d'impédance est particulièrement optimisée pour caractériser un milieu et les inventeurs ont constaté que cette mesure permettait précisément de déterminer la position de l'aiguille dans l'oeuf. En outre, cette mesure est répétitive et la forme des courbes - représentant l'impédance en fonction de la position de l'aiguille dans l'oeuf, ou l'impédance en fonction du temps, dans le cas où l'aiguille est plongée dans l'oeuf et où des mesures d'impédance sont faites périodiquement à différentes profondeurs de l'aiguille- est sensiblement la même, quels que soient les oeufs testés. Un procédé selon cette variante autorise donc une automatisation du processus de contrôle de la position de l'aiguille, et donc de l'injection et/ou du prélèvement, par la détermination des sauts d'impédance d'une zone à l'autre.

Selon une solution préférée, l'aiguille d'injection et/ou de prélèvement est choisie en partie métallique de manière à pouvoir faire office de première électrode. Une telle aiguille en partie métallique forme la première électrode, ce qui rend la détection précise et la mise en oeuvre du procédé simplifié.

Un procédé selon l'invention s'étend également à un procédé d'assistance au positionnement d'une pointe d'aiguille d'injection et/ou de prélèvement dans un oeuf comprenant les étapes consistant à:
- mesurer au moins une grandeur électrique caractéristique d'une zone cible en vue d'obtenir une grandeur électrique de référence ;
- mesurer ladite grandeur électrique au niveau de ladite pointe pour obtenir une valeur mesurée pendant que la pointe progresse dans l'oeuf;
- comparer ladite valeur mesurée à ladite grandeur caractéristique de référence.
- déplacer ladite aiguille si la valeur mesurée ne correspond pas à la grandeur électrique de référence jusqu'à ce que la valeur mesurée corresponde à la grandeur électrique de référence.

Un procédé selon l'invention peut être utilisé pour :
- injecter un vaccin et/ou une substance pharmaceutique ;
- injecter un produit de diagnostic ;
- réaliser un test de sexage ;
- identifier si l'oeuf est embryonné ou pas.
- réaliser des prélèvements dans certains compartiments de l'oeuf

L'invention s'étend également à un système de détermination de la position d'une pointe d'aiguille d'injection et/ou de prélèvement dans un oeuf comprenant :
- des premiers moyens de mesure d'au moins une grandeur électrique caractéristique d'une zone cible, destinés à fournir une grandeur électrique de référence ;
- un dispositif comprenant :
- une première électrode au niveau de la pointe de l'aiguille d'injection,
- une seconde électrode à l'extérieur de l'oeuf et reliée électriquement à la première électrode ;
- des deuxièmes moyens de mesure de ladite grandeur électrique entre ladite première électrode et ladite deuxième électrode ;
- des moyens de comparaison de ladite grandeur électrique de référence avec une valeur fournie par lesdits deuxièmes moyens de mesure.

Un tel système permet de mettre en oeuvre un procédé selon l'invention.

Avantageusement, un système selon l'invention comprend en outre des moyens de comparaison d'au moins une valeur mesurée fournie par les deuxièmes moyens de mesure à une table de plages de valeurs prédéterminées, dont chaque plage de valeurs correspond à une zone de l'oeuf prédéterminée.

Ces moyens de comparaison peuvent être des moyens numériques, des moyens analogiques ou une combinaison de moyens numériques et analogiques. Ils comprennent selon un mode de réalisation au moins un microprocesseur, au moins une mémoire et au moins une horloge. Le microprocesseur est en outre adapté pour traiter les mesures et comparer ces mesures avec des valeurs prédéterminées. Ces valeurs prédéterminées peuvent être stockées sur une mémoire accessible par le microprocesseur avant la mise en oeuvre du dispositif pour déterminer la position de l'aiguille. Selon une autre variante, ces valeurs prédéterminées peuvent être directement évaluées par le microprocesseur à partir d'une première mesure. Les mesures de la table sont alors calculées selon une règle prédéfinie paramétrable.

Avantageusement, un dispositif selon l'invention comprend en outre un bac de solution conductrice adapté pour recevoir la base de l'oeuf, ladite seconde électrode étant en outre plongée dans le bac de réception, de manière à assurer une conduction électrique entre les deux électrodes.

Avantageusement et selon l'invention, ladite seconde électrode est placée sur la coquille externe de l'oeuf.

Avantageusement et selon l'invention, lesdits premiers et deuxièmes moyens de mesure sont des moyens de mesure d'une impédance.

Ces moyens peuvent être de tous types. Selon un mode de réalisation, ces moyens comprennent une source de tension adaptée pour maintenir une tension aux bornes des électrodes, un ampèremètre adapté pour déterminer le courant circulant entre les électrodes, et des moyens de calcul de l'impédance à partir des valeurs de tension et de courant mesurés.

Selon une solution préférée, ladite aiguille d'injection est métallique de manière à pouvoir faire office de première électrode.

### 5. Liste des figures

D'autres buts, caractéristiques et avantages de l'invention apparaîtront à la lecture de la description suivante donnée à titre uniquement non limitatif et qui se réfère aux figures annexées, dans lesquelles :
- la figure 1 est une vue schématique d'un dispositif de détermination de la position d'une aiguille dans un oeuf selon un mode de réalisation de l'invention,
- la figure 2 est une vue schématique d'un dispositif de détermination de la position d'une aiguille dans un oeuf selon un autre mode de réalisation de l'invention,
- la figure 3 est une vue schématique d'un détail d'un dispositif de détermination de la position d'une aiguille dans un oeuf selon un autre mode de réalisation de l'invention,
- la figure 4 est une vue schématique extérieure d'un dispositif selon un mode de réalisation de l'invention,
- la figure 5 est une vue schématique d'une courbe représentant l'impédance en fonction du temps obtenue par la mise en oeuvre d'un procédé selon un mode de réalisation l'invention avec un dispositif selon un mode de réalisation de l'invention au cours d'une opération d'injection.

### 6. Description détaillée d'un mode de réalisation de l'invention

Sur les figures, les échelles et les proportions ne sont pas strictement respectées et ce, à des fins d'illustration et de clarté.

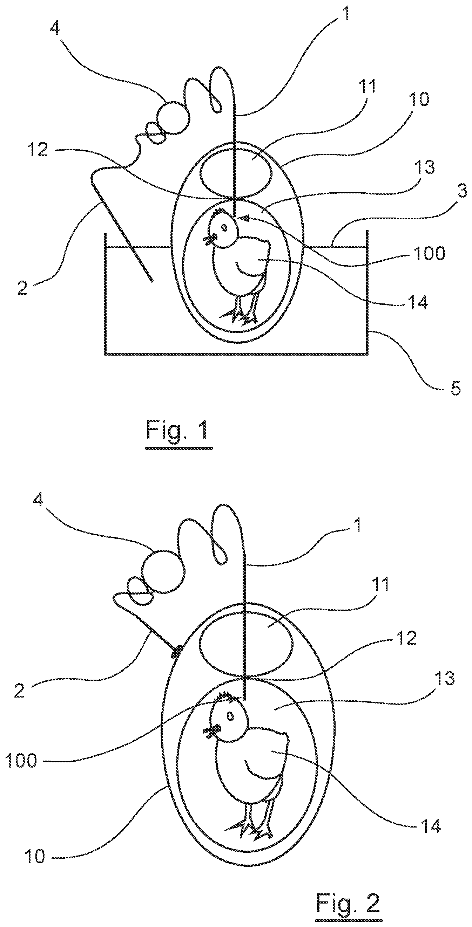

Dans toute la description détaillée qui suit en référence aux figures, sauf indication contraire, chaque pièce des dispositifs décrits est décrite telle qu'elle est agencée lorsque le dispositif est en fonctionnement, c'est-à-dire lorsque l'aiguille d'injection et/ou de prélèvement est insérée dans un oeuf à partir de son sommet. Cet agencement est représenté notamment sur les figures 1 et 2.

Les figures représentent un dispositif de détermination de la position d'une aiguille d'injection qui peut être utilisé pour déterminer la position de l'aiguille en vue d'injecter un produit de tous types dans un oeuf. Ce produit peut être un vaccin, une vitamine, une sonde, un colorant et de manière générale toute substance liquide et/ou gazeuse utile au traitement ou au diagnostic d'un oeuf aviaire. L'invention concerne néanmoins également un dispositif de détermination de la position d'une aiguille de prélèvement d'une substance interne à l'oeuf. L'homme du métier ne rencontrera aucune difficulté à remplacer l'aiguille d'injection décrite dans la description qui suit par une aiguille de prélèvement pour réaliser cette variante de réalisation.

Selon le mode de réalisation de la figure 1, le dispositif comprend une aiguille 1 d'injection métallique conductrice formant une première électrode dont la partie terminale est constituée par la pointe 100 de l'aiguille. Le dispositif comprend également une seconde électrode 2 plongée dans une solution conductrice 3.

Le dispositif selon ce mode de réalisation comprend également des moyens 4 de mesure de l'impédance (en tant que grandeur électrique caractéristique d'un milieu) du milieu entre la première électrode 1 et la seconde électrode 2. Ces mesures sont ensuite analysées par une unité de traitement non représentée sur les figures pour déterminer une zone de localisation de l'aiguille dans l'oeuf.

En pratique, l'impédance est mesurée au fur et à mesure du déplacement de l'aiguille dans l'oeuf. En d'autres termes, on obtient une valeur d'impédance en une position de la pointe dans l'oeuf, l'opération de mesure étant réalisée en continu pour obtenir un relevé de la variation d'impédance en fonction du déplacement d l'aiguille dans l'oeuf.

Les moyens 4 de mesure de l'impédance comprennent selon un mode de réalisation de l'invention une source de tension, un ampèremètre et une unité de calcul permettant de calculer l'impédance à partir des valeurs de courant mesurées et de tension. La source de tension peut par exemple délivrer une tension de 4 V à la fréquence de 1MHz. Ces valeurs permettent d'obtenir de bons résultats sur des oeufs de poulet. Cela étant, d'autres paramètres peuvent êtres utilisés sans porter atteinte aux résultats obtenus. Il convient néanmoins de choisir des paramètres qui permettent de limiter l'exposition de l'embryon au courant pour éviter de l'endommager.

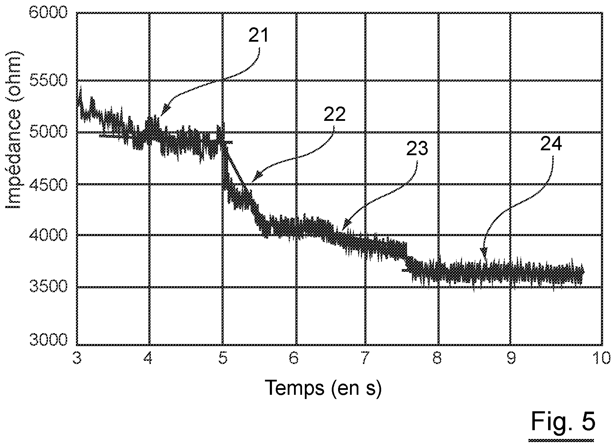

La figure 5 présente les résultats obtenus au cours d'une plongée de l'aiguille 1 dans l'ceuf 10 à partir de son sommet jusqu'à ce que l'aiguille soit en contact avec l'embryon 14 (schématiquement représenté par un poussin sur les figures à des fins de clarté).

Cette courbe présente quatre portions bien distinctes représentées schématiquement par les références 21, 22, 23 et 24.

La portion 21 représente les valeurs d'impédance mesurées par le dispositif selon le mode de réalisation des figures 1 et 2 lorsque l'aiguille 1 est dans la poche d'air, représenté par la référence 11 sur les figures 1 et 2. La portion 22 représente les valeurs d'impédance mesurées par le dispositif selon le mode de réalisation des figures 1 et 2 lorsque l'aiguille 1 est dans le liquide allantoïdien, représentée par la référence 12 sur les figures 1 et 2. La portion 23 représente les valeurs d'impédance mesurées par le dispositif selon le mode de réalisation des figures 1 et 2 lorsque l'aiguille 1 est dans le liquide amniotique, représentée par la référence 13 sur les figures 1 et 2. La portion 24 représente les valeurs d'impédance mesurées par le dispositif selon le mode de réalisation des figures 1 et 2 lorsque l'aiguille 1 est dans l'embryon 14.

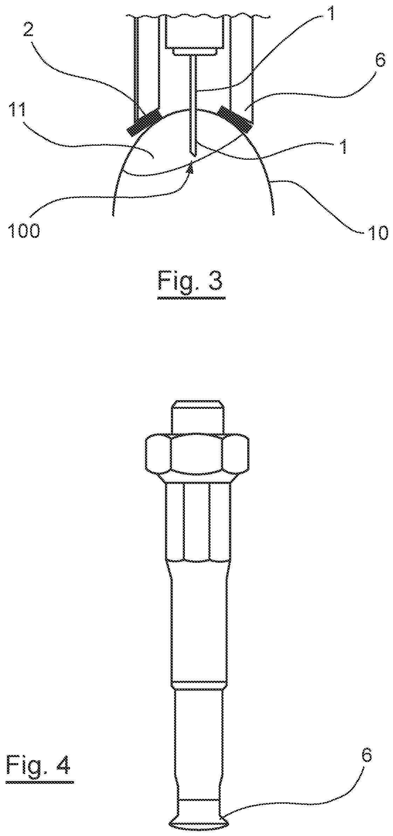

Selon l'invention, la position de l'aiguille 1 dans l'oeuf 10 peut donc être définie soit en déterminant dans quelle plage de valeurs se situe l'impédance. Par exemple, d'après la figure 4, si l'impédance mesurée par le dispositif est de 3995 ohms, cette valeur appartient à la portion 23 de la courbe, ce qui indique que l'aiguille est dans la zone du liquide 13 amniotique.

Dans un système selon l'invention, le dispositif qui vient d'être décrit est associé à des premiers moyens de mesure (les moyens 4 de mesure de l'impédance du dispositif, constituant des deuxièmes moyens de mesure) de l'impédance d'une zone cible en vue d'obtenir une grandeur électrique de référence.

On note que ces premiers moyens de mesure (non représentés) peuvent être mis en oeuvre dans une phase complètement dissociée de la phase d'injection ou de prélèvement au cours de laquelle le dispositif décrit précédemment est mis en oeuvre.

Les moyens de détermination d'une zone de localisation de l'aiguille comprennent selon un mode de réalisation un microprocesseur, au moins une mémoire et une horloge permettant de synchroniser les opérations du microprocesseur. Selon un mode de réalisation de l'invention, cette mémoire comprend un programme logiciel adapté pour déterminer la zone de localisation à partir des mesures délivrées par les moyens de mesure et mémorisées par exemple dans ladite mémoire des moyens de détermination. Ce logiciel met alors en oeuvre les étapes de traitement d'un procédé selon un mode de réalisation de l'invention. Ces étapes consistent selon un mode de réalisation à déterminer dans quelle plage de valeurs se situe la dernière mesure de grandeur caractéristique. Selon un autre mode de réalisation, les moyens de détermination sont une combinaison d'un élément matériel et d'un sous-programme logiciel, voire une combinaison de plusieurs modules logiciels. Ces moyens de détermination font également de préférence office de moyens de comparaison d'au moins une valeur (mesurée par les deuxièmes moyens de mesure) à une table de valeurs (constituée à l'aide de valeurs mesurées par les premiers moyens de mesure), par exemple stockée dans la mémoire.

Les valeurs d'impédance de la table établie avec les premiers moyens de mesure sont mémorisées dans une mémoire accessible par les moyens de détermination de la zone. A partir du moment où l'aiguille entre à l'intérieur de l'oeuf, les valeurs d'impédance mesurées par les deuxièmes moyens de mesure (première et deuxième électrodes) sont comparées aux valeurs d'impédance de la table mémorisée.

On note que la table peut comprendre des plages de valeurs correspondant chacune à une des zones de l'oeuf (chambre à air, liquide allantoïdien, liquide amniotique, embryon et coquille).

Un dispositif selon l'invention permet donc de détecter au moins les zones correspondant à la chambre à air, au liquide allantoïdien, au liquide amniotique et à l'embryon.

La seconde électrode 2 est selon le mode de réalisation de la figure 1 plongée dans un bac 5 de réception d'une solution conductrice 3. Ce bac de réception est en outre adapté pour recevoir la base de l'oeuf 10.

Selon un autre mode de réalisation tel que représenté sur les figures 2 et 3, la seconde électrode est directement placée sur la coquille de l'oeuf 10. Pour ce faire et tel que représenté sur les figures 3 et 4, l'électrode peut être formée sur une ventouse 6 destinée à venir en appui contre l'oeuf 12 lors du traitement de l'oeuf sur une chaîne automatique de traitement. Cette ventouse 6 est donc selon ce mode de réalisation métallisée de manière à pouvoir conduire le courant. Un tel agencement est particulièrement destiné et adapté à une installation sur une chaîne automatique de traitement des oeufs,. Dans le mode de réalisation des figures 2 et 3, dans lequel l'électrode 2 est directement placée sur l'oeuf, il est en outre prévu un moyen pour enduire la zone de contact par une solution conductrice de manière à améliorer la conduction. Cette solution conductrice peut être acheminée par tous types de moyens. Selon un mode de réalisation avantageux, l'électrode 2 est positionnée de sorte que le contact avec l'oeuf 10 s'effectue au voisinage immédiat de la zone où les gouttelettes de désinfectant par exemple chlorée sont prévues sur les chaînes de traitement automatique des oeufs.

La figure 4 est une vue schématique d'un dispositif d'injection dans lequel le dispositif selon l'invention peut être installé. Ce dispositif d'injection comprend une ventouse 4 destinée à venir en contact avec l'oeuf 20 et un tube longitudinal comprenant l'aiguille d'injection ainsi qu'un dispositif de déplacement de l'aiguille le long de la direction longitudinale. La figure 3 est une vue en coupe partielle du dispositif de la figure 4 montrant l'aiguille 1 formant la première électrode et la ventouse 6 formant la seconde électrode.

Selon un autre mode de réalisation, l'aiguille n'est pas métallique mais porte solidairement une électrode métallique au voisinage de l'extrémité de l'aiguille portant l'orifice d'injection. Cette architecture est moins avantageuse mais peut être préférée pour certaines injections interdisant une utilisation d'une aiguille métallique, ou pour transformer et améliorer un dispositif d'injection existant en le dotant des fonctionnalités du dispositif selon l'invention.

L'invention concerne également un procédé de détermination de la position d'une aiguille dans un oeuf.

Un procédé selon l'invention peut avantageusement être utilisé pour la mise en oeuvre d'un procédé d'injection et/ou de prélèvement d'une substance dans un oeuf. Un tel procédé comprend par exemple les étapes consistant à :
- solidariser une première électrode à l'aiguille d'injection ou prévoir une aiguille conductrice de courant, par exemple une aiguille métallique,
- relier ladite première électrode à une seconde électrode agencée à l'extérieur de l'oeuf, de préférence en contact avec la coquille de l'oeuf par le biais d'une solution conductrice,
- insérer l'aiguille et la première électrode dans l'oeuf,
- mesurer l'impédance entre les électrodes régulièrement au cours du déplacement de l'aiguille selon une direction allant du sommet de l'oeuf jusqu'à sa base,
- déterminer pour chaque mesure, la zone de présence de l'aiguille dans l'oeuf,
- injecter et/ou prélever la substance si la zone déterminée correspond à la zone d'injection et/ou de prélèvement cible.

Un procédé selon l'invention et un dispositif selon l'invention ne sont pas limités aux seuls modes de réalisation décrits et peuvent trouver d'autres applications que celles décrites. En particulier, un dispositif selon l'invention peut être relié à divers modules de calculs et d'analyse permettant de faire par exemple des statistiques sur les valeurs de grandeurs caractéristiques relevées lors des opérations d'injection et/ou de prélèvement.

Un procédé selon l'invention peut être utilisé pour :
- injecter un vaccin et/ou une substance pharmaceutique, telle qu'une hormone, une vitamine... ;
- injecter un produit de diagnostic, telle qu'une sonde pour diagnostiquer une pathologie, une malformation ou encore pour vérifier qu'un vaccin a été inj ecté ;
- réaliser un test de sexage ;
- réaliser un prélèvement, par exemple pour procéder à un test de qualité.

Un procédé et un système selon l'invention peuvent également être utilisés pour déterminer la présence ou l'absence d'un embryon dans l'oeuf. En particulier, jusqu'à présent, la technique utilisée pour déterminer la présence d'un embryon est le mirage. Selon cette méthode, une lumière forte est focalisée sur l'oeuf qui est visuellement inspectée. Un procédé et un système selon l'invention permettent donc un autre moyen de détection de la présence d'un embryon, ce moyen étant plus robuste que la technique du mirage, car ne reposant pas sur l'oeil humain et permet en outre une automatisation aisée de la méthode de détection.

En pratique, connaissant la grandeur électrique de référence caractéristique d'un embryon, sous la forme d'une plage d'impédances, il est possible de vérifier si la valeur mesurée au niveau de la pointe de l'aiguille entre ou pas dans ladite plage d'impédances. Si après une course prédéterminée de la pointe de l'aiguille dans l'oeuf, la valeur mesurée n'entre pas dans la plage d'impédances, il sera déduit que l'oeuf ne contient pas d'embryon.

## Revendications

1. Procédé d'assistance au positionnement d'une pointe d'aiguille (1) d'injection et/ou de prélèvement dans un oeuf (10), comprenant les étapes consistant à :
- mesurer au moins une grandeur électrique caractéristique d'une zone cible en vue d'obtenir une grandeur électrique de référence ;
- mesurer ladite grandeur électrique au niveau de ladite pointe pour obtenir une valeur mesurée en une position de la pointe dans l'oeuf(10) ;
- comparer ladite valeur mesurée à ladite grandeur caractéristique de référence.

2. Procédé selon la revendication 1, **caractérisé en ce qu'**il comprend en outre une phase consistant à comparer au moins une valeur mesurée de la grandeur caractéristique à une table de plages de valeurs prédéterminées, dont chaque plage de valeurs correspond à une zone de l'oeuf prédéterminée.

3. Procédé selon l'une des revendications 1 et 2, **caractérisé en ce que** l'étape de mesure de la grandeur électrique au niveau de la pointe est réalisée à l'aide d'une première électrode au niveau de la pointe, le procédé comprenant en outre une étape consistant à plonger ladite seconde électrode (2) dans une solution (3) conductrice dans laquelle la base de l'oeuf est également baignée de manière à assurer une conduction électrique entre les deux électrodes par l'intermédiaire de cette solution conductrice (3) et l'oeuf (12).

4. Procédé selon l'une des revendications 1 et 2, **caractérisé en ce que** l'étape de mesure de la grandeur électrique au niveau de la pointe est réalisée à l'aide d'une première électrode au niveau de ladite pointe et d'une deuxième électrode, le procédé comprenant en outre l'étape consistant à apposer ladite seconde électrode (2) sur la coquille externe de l'oeuf.

5. Procédé selon la revendication 4, **caractérisé en ce que** ladite coquille de l'oeuf est en outre enduit avec une solution conductrice au niveau du contact avec ladite seconde électrode (2).

6. Procédé selon l'une des revendications 1 à 5, **caractérisé en ce que** ladite grandeur électrique caractéristique mesurée est l'impédance du milieu dans laquelle la pointe est placée.

7. Procédé selon l'une des revendications 1 à 6, **caractérisé en ce que** ladite aiguille (1) est choisie métallique de manière à pouvoir faire office de première électrode.

8. Système de détermination de la position d'une pointe d'aiguille (1) d'injection et/ou de prélèvement dans un oeuf (12) comprenant :
- des premiers moyens (4) de mesure d'au moins une grandeur électrique caractéristique d'une zone cible, destinés à fournir une grandeur électrique de référence
- un dispositif comprenant :
- une première électrode au niveau de la pointe de l'aiguille (1) d'injection,
- une seconde électrode (2) à l'extérieur de l'oeuf (12) et reliée électriquement à la première électrode ;
- des deuxièmes moyens de mesure de ladite grandeur électrique entre ladite première électrode et ladite deuxième électrode ;
- des moyens de comparaison de ladite grandeur électrique de référence avec une valeur fournie par lesdits deuxièmes moyens de mesure.

9. Système selon la revendication 8, **caractérisé en ce qu'**il comprend des moyens de comparaison d'au moins d'une valeur fournie par lesdits deuxièmes moyens de mesure à une table de plage de valeurs prédéterminées, dont chaque plage de valeurs correspond à une zone (11 ; 12 ; 13 ; 14) de l'oeuf prédéterminée.

10. Système selon l'une des revendications 8 et 9, **caractérisé en ce qu'**il comprend en outre un bac (5) de solution (3) conductrice adapté pour recevoir la base de l'oeuf, ladite seconde électrode (2) étant en outre plongée dans le bac (5) de réception.

11. Système selon l'une des revendications 8 à 10, **caractérisé en ce que** ladite seconde électrode (2) est destinée à être placée sur la coquille externe de l'oeuf.

12. Système selon l'une des revendications 8 à 11, **caractérisé en ce que** lesdits premiers et deuxièmes moyens (4) de mesure d'une grandeur électrique caractéristique sont des moyens de mesure d'une impédance.

13. Système selon l'une des revendications 8 à 12, **caractérisé en ce que** ladite aiguille (1) d'injection et/ou de prélèvement est métallique de manière à pouvoir faire office de première électrode.

14. Utilisation d'un procédé selon l'une quelconque des revendications 1 à 7 pour injecter un vaccin et/ou une substance pharmaceutique.

15. Utilisation d'un procédé selon l'une quelconque des revendications 1 à 7 pour injecter un produit de diagnostic.

16. Utilisation d'un procédé selon l'une quelconque des revendications 1 à 7 pour réaliser un test de sexage.

17. Utilisation d'un procédé selon l'une quelconque des revendications 1 à 7 pour identifier si l'oeuf est embryonné ou pas.

18. Utilisation d'un procédé selon l'une quelconque des revendications 1 à 7 pour permettre le prélèvement dans un compartiment spécifique de l'oeuf

## Patentansprüche

1. Verfahren zur Unterstützung der Positionierung einer Nadelspitze (1) zur Injektion und/oder Entnahme in einem Ei (10), umfassend die folgenden Schritte, darin bestehend:
- mindestens eine elektrische Größe zu messen, die für eine Zielzone charakteristisch ist, um eine elektrische Referenzgröße zu erhalten;
- die elektrische Größe im Bereich der Spitze zu messen, um einen Messwert an einer Position der Spitze im Ei (10) zu erhalten;
- den Messwert mit der charakteristischen Referenzgröße zu vergleichen.

2. Verfahren nach Anspruch 1, **dadurch gekennzeichnet, dass** es ferner eine Phase umfasst, darin bestehend, mindestens einen Messwert der charakteristischen Größe mit einer Tabelle von vorbestimmten Wertebereichen zu vergleichen, wobei jeder Wertebereich einer vorbestimmten Zone des Eis entspricht.

3. Verfahren nach einem der Ansprüche 1 und 2, **dadurch gekennzeichnet, dass** der Schritt des Messens der elektrischen Größe im Bereich der Spitze mit Hilfe einer ersten Elektrode im Bereich der Spitze durchgeführt wird, wobei das Verfahren ferner einen Schritt umfasst, der darin besteht, die zweite Elektrode (2) in eine leitende Lösung (3) zu tauchen, in die die Basis des Eis auch eingetaucht ist, um eine elektrische Leitung zwischen den beiden Elektroden mit Hilfe dieser leitenden Lösung (3) und dem Ei (12) zu gewährleisten.

4. Verfahren nach einem der Ansprüche 1 und 2, **dadurch gekennzeichnet, dass** der Schritt des Messens der elektrischen Größe im Bereich der Spitze mit Hilfe einer ersten Elektrode im Bereich der Spitze und einer zweiten Elektrode durchgeführt wird, wobei das Verfahren ferner den Schritt umfasst, der darin besteht, die zweite Elektrode (2) auf die äußere Schale des Eis zu setzen.

5. Verfahren nach Anspruch 4, **dadurch gekennzeichnet, dass** die Schale des Eis ferner mit einer leitenden Lösung im Kontaktbereich mit der zweiten Elektrode (2) bestrichen ist.

6. Verfahren nach einem der Ansprüche 1 bis 5, **dadurch gekennzeichnet, dass** die gemessene charakteristische elektrische Größe die Impedanz des Mediums ist, in dem die Spitze angeordnet ist.

7. Verfahren nach einem der Ansprüche 1 bis 6, **dadurch gekennzeichnet, dass** die Nadel (1) metallisch gewählt wird, um als erste Elektrode dienen zu können.

8. System zur Bestimmung der Position einer Nadelspitze (1) zur Injektion und/oder Entnahme in einem Ei (12), umfassend:
- erste Mittel (4) zum Messen mindestens einer elektrischen Größe, die für eine Zielzone charakteristisch ist, die dazu bestimmt sind, eine elektrische Referenzgröße zu liefern,
- eine Vorrichtung, umfassend:
- eine erste Elektrode im Bereich der Spitze der Injektionsnadel (1),
- eine zweite Elektrode (2) außerhalb des Eis (12), die elektrisch mit der ersten Elektrode verbunden ist;
- zweite Mittel zum Messen der elektrischen Größe zwischen der ersten Elektrode und der zweiten Elektrode;
- Mittel zum Vergleichen der elektrischen Referenzgröße mit einem Wert, der von den zweiten Messhilfsmitteln geliefert wird.

9. System nach Anspruch 8, **dadurch gekennzeichnet, dass** es Mittel zum Vergleichen mindestens eines von den zweiten Messhilfsmitteln gelieferten Werts mit einer Tabelle von vorbestimmten Wertebereichen umfasst, wobei jeder Wertebereich einer vorbestimmten Zone (11; 12; 13; 14) des Eis entspricht.

10. System nach einem der Ansprüche 8 und 9, **dadurch gekennzeichnet, dass** es ferner einen Behälter (5) einer leitenden Lösung (3) umfasst, der dazu vorgesehen ist, die Basis des Eis aufzunehmen, wobei die zweite Elektrode (2) ferner in den Aufnahmebehälter (5) getaucht ist.

11. System nach einem der Ansprüche 8 bis 10, **dadurch gekennzeichnet, dass** die zweite Elektrode (2) dazu bestimmt ist, auf der Außenschale des Eis angeordnet zu werden.

12. System nach einem der Ansprüche 8 bis 11, **dadurch gekennzeichnet, dass** die ersten und zweiten Mittel (4) zum Messen einer charakteristischen elektrischen Größe Mittel zum Messen einer Impedanz sind.

13. System nach einem der Ansprüche 8 bis 12, **dadurch gekennzeichnet, dass** die Injektions- und/oder Entnahmenadel (1) metallisch ist, um als erste Elektrode dienen zu können.

14. Verwendung eines Verfahrens nach einem der Ansprüche 1 bis 7, um einen Impfstoff und/oder eine pharmazeutische Substanz zu injizieren.

15. Verwendung eines Verfahrens nach einem der Ansprüche 1 bis 7, um ein Diagnoseprodukt zu injizieren.

16. Verwendung eines Verfahrens nach einem der Ansprüche 1 bis 7, um eine Geschlechtsbestimmung durchzuführen.

17. Verwendung eines Verfahrens nach einem der Ansprüche 1 bis 7, um festzustellen, ob das Ei befruchtet ist.

18. Verwendung eines Verfahrens nach einem der Ansprüche 1 bis 7, um die Entnahme aus einer spezifischen Kammer des Eis zu ermöglichen.

## Claims

1. Method for assisting in the positioning of a tip of a needle (1) for injection into and/or removal from an egg (10), comprising the steps of:
- measuring at least one characteristic electrical parameter of a target zone in order to obtain a reference electrical value;
- measuring said electrical parameter at said tip to obtain a value measured at a position of the tip in the egg (10);
- comparing said measured value with the characteristic reference parameter.

2. Method according to claim 1, **characterized in that** it further comprises a phase for comparing at least one measured value of the characteristic parameter with a table of ranges of predetermined values, of which each range of values corresponds to a predetermined zone of the egg.

3. Method according to one of the claims 1 and 2, **characterized in that** the step for measuring the electrical parameter at the tip is carried out by means of a first electrode at the tip, the method further comprising a step for plunging said second electrode (2) into a conductive solution (3) in which the base of the egg is also bathed so as to provide for electrical conduction between the two electrodes by means of this conductive solution (3) and the egg (12).

4. Method according to one of the claims 1 and 2, **characterized in that** the step for measuring the electrical parameter at the tip is carried out by means of a first electrode at said tip and a second electrode, the method furthermore consisting in placing said second electrode (2) on the external shell of the egg.

5. Method according to claim 4, **characterized in that** said shell of the egg is furthermore coated with a conductive solution at the level of the contact with said second electrode (2).

6. Method according to one of the claims 1 to 5, **characterized in that** said measured characteristic electrical parameter is the impedance of the medium in which the tip is placed.

7. Method according to one of the claims 1 to 6, **characterized in that** said needle (1) is chosen to be metallic so as to be able to act as a first electrode.

8. System for determining the position of a tip of a needle (1) for injection into and/or removal from an egg (12) comprising:
- first means (4) for measuring at least one characteristic electrical parameter of a target zone, intended to provide a reference electrical parameter;
- a device comprising:
- a first electrode at the tip of the injection needle (1),
- a second electrode (2) on the exterior of the egg (12) and electrically connected to the first electrode;
- second means for measuring said electrical parameter between said first electrode and said second electrode;
- means for comparing said reference electrical parameter with a value provided by said second means for measuring.

9. System according to claim 8, **characterized in that** it comprises means for comparing at least one value given by said second means for measuring with a table of ranges of predetermined values, of which each range of values corresponds to a predetermined zone (11; 12; 13; 14) of the egg.

10. System according to one of the claims 8 and 9, **characterized in that** it further comprises a tank (5) for receiving a conductive solution (3) adapted to taking the base of the egg, said second electrode (2) being furthermore plunged into the reception tank (5).

11. System according to one of the claims 8 to 10, **characterized in that** said second electrode (2) is intended for being placed on the external shell of the egg.

12. System according to one of the claims 8 to 11, **characterized in that** said first and second means (4) for measuring a characteristic reference parameter are means for measuring an impedance.

13. System according to one of the claims 8 to 12, **characterized in** said needle (1) for injecting and/or removal is metallic so as to be able to act as a first electrode.

14. Use of a method according to any one of the claims 1 to 7 to inject a vaccine and/or a pharmaceutical substance.

15. Use of a method according to any one of the claims 1 to 7 to inject a diagnostic product.

16. Use of a method according to any one of the claims 1 to 7 to carry out a sexing test.

17. Use of a method according to any one of the claims 1 to 7 to determine whether the egg is embryonic or not.

18. Use of a method according to any one of the claims 1 to 7 to enable the removal in a specific compartment of the egg.
